(19) Europäisches Patentamt
European Patent Office
Office européen des brevets

(11) **EP 4 572 094 A1**

(12) **EUROPEAN PATENT APPLICATION**
published in accordance with Art. 153(4) EPC

(43) Date of publication:
**18.06.2025 Bulletin 2025/25**

(21) Application number: **22930138.7**

(22) Date of filing: **17.10.2022**

(51) International Patent Classification (IPC):
**H02K 1/276** (2022.01)

(52) Cooperative Patent Classification (CPC):
**H02K 1/276**

(86) International application number:
**PCT/JP2022/038529**

(87) International publication number:
**WO 2024/034149 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2022 JP 2022127926**

(71) Applicants:
- **Kabushiki Kaisha Toshiba**
  **Minato-ku**
  **Tokyo 105-0023 (JP)**
- **Toshiba Infrastructure Systems & Solutions Corporation**
  **Kawasaki-shi, Kanagawa 212-8585 (JP)**

(72) Inventors:
- **MAKINO, Hiroaki**
  **Kawasaki-shi, Kanagawa 212-8585 (JP)**
- **HISADA, Hideki**
  **Kawasaki-shi, Kanagawa 212-8585 (JP)**
- **MORI, Daisuke**
  **Kawasaki-shi, Kanagawa 212-8585 (JP)**
- **SASAKI, Naoya**
  **Kawasaki-shi, Kanagawa 212-8585 (JP)**
- **KOBAYASHI, Kotaro**
  **Kawasaki-shi, Kanagawa 212-8585 (JP)**

(74) Representative: **AWA Sweden AB**
**Box 5117**
**200 71 Malmö (SE)**

(54) **PERMANENT MAGNET ROTOR AND PERMANENT MAGNET ROTARY ELECTRIC MACHINE**

(57) A permanent magnet rotor (100) includes: a rotor shaft; a rotor core (120) attached thereto, and having, in each magnetic pole, a first outer through hole (121) and a second outer through hole (122) that are formed on a radially outer side to make a pair and a first inner through hole (124) and a second inner through hole (125) that are formed on a more radially inner side than these to make a pair; and a first outer magnet (131), a second outer magnet (132), a first inner magnet (133), and a second inner magnet (134) housed in these respectively. An outer opening angle Θa between the first outer through hole (121) and the second outer through hole (122) is larger than an inner opening angle Θb between the first inner through hole (124) and the second inner through hole (125). An inter-inner through hole length between the first inner through hole (124) and the second inner through hole (125) is larger than that between the first outer through hole (121) and the second outer through hole (122).

FIG. 2

EP 4 572 094 A1

**Description**

FIELD

Embodiments of the present invention relate to a permanent magnet rotor and a permanent magnet rotary electric machine using the same.

BACKGROUND

To achieve a low-carbon/decarbonized society, electrically-powered vehicles such as hybrid electric vehicles (HEV) and electric vehicles (EV) are coming into wide use. As power sources for these, permanent magnet motors are typically used. Because of its excellent variable-speed operation characteristics, a permanent magnet motor having permanent magnets arranged in a two-layered V-shape has been proposed and used in recent years.

Further, aiming at higher performance of a motor, its speed is becoming higher. In a rotor, bridges are provided to mechanically support centrifugal force acting on a core on the radially outer side of flux barriers and on permanent magnets. Generally, a thick bridge is capable of alleviating stress caused by the centrifugal force. On the other hand, as the bridge is thicker, a leakage magnetic flux increases to lower performance such as torque. Thus, there is a contradictory issue. This necessitates an art to alleviate the stress acting on the bridges without lowering performance.

To cope with this, there has been proposed a structure for the configuration in which two permanent magnets are arranged to face each other in the circumferential direction with their distance becoming larger as they go more radially outward. In this structure, flux barriers communicate with the radially outer side of a rotor core, that is, there are no top bridges on the radially outer part, and centrifugal force is supported only by a center bridge on the radially inner part. Achieving the support with a structurally advantageous axial force, this method is expected to be capable of alleviating stress while maintaining performance or improving performance while maintaining stress. In the case where the permanent magnets facing each other are the same and are symmetrical with respect to the d-axis which is the center axis of the magnetic pole, this is usually called a V-arrangement.

PRIOR ART DOCUMENT

PATENT DOCUMENT

Patent Document 1: International Publication No. 2018/190103
Patent Document 2: Japanese Patent Application Laid-open No. 2020-14322

Patent Document 3: International Publication No. 2018/051690
Patent Document 4: International Publication No. 2015/156353

SUMMARY OF THE INVENTION

PROBLEMS TO BE SOLVED BY THE INVENTION

As a configuration in which a plurality of layers, for example, two layers of a set of two permanent magnets facing each other in the circumferential direction are arranged in the radial direction, the following proposals have been made as will be described next.

A first example describes a bridge width for achieving both a reduction in a leakage magnetic flux and mechanical strength of bridges, in a configuration in which flux barriers each have a top bridge and have, on a radially inner side, two center bridges.

A second example describes that, in a configuration in which all the flux barriers have top bridges, and circumferentially inner flux barriers have two center bridges, by arranging the bridges of the flux barriers such that they are not aligned on a straight line, it is possible to reduce a leakage magnetic flux while maintaining mechanical strength.

As described above, in a rotor having top bridges and a plurality of flux barriers, it has conventionally been known that an index for selecting an appropriate bridge width for achieving both performance and strength or the non-alignment of the center bridges in the flux barriers on a straight line is necessary. In other words, if an appropriate bridge width is selected and the center bridges are arranged such that they are not aligned on a straight line, performance and mechanical strength are both achieved regardless of how the bridges are arranged.

On the other hand, in a rotor in which a plurality of flux barriers with no top bridges are adjacent to each other, since radially outer sides of a core in between are not restricted, these parts of the core noticeably deform, necessitating a measure for the new problem.

Now, let us consider, as a region of interest, a part (layer) of a rotor core where flux barriers housing two permanent magnets at positions facing each other have no top bridges but have openings, and two center bridges connect a radially outer part of the fan shape and the core portion on the radially inner part thereof. In this case, the center bridge on the radially inner part needs to have a larger supporting force, and thus its straight portion is thicker than that of the center bridge on the radially outer side, and at a corner portion at its root, a large arc is formed. In the case where the layers without the top bridges are adjacent, the core between the layers has a cantilever structure with the center bridges being a fixed end because the radially outer sides of the core portion sandwiched by the magnets are not restricted. Therefore, it is necessary to reduce bending stress acting on the roots of the bridges without lowing torque performance.

An object of the present invention is to provide a permanent magnet rotor that achieves a reduction in bending stress acting on roots of bridges without lowing torque performance.

MEANS FOR SOLVING THE PROBLEMS

To attain the above object, a permanent magnet rotor according to an embodiment of the present invention includes: a rotor shaft extending in a rotation axis direction; a rotor core attached to the rotor shaft, and having, in each magnetic pole, a first outer through hole and a second outer through hole that are formed on a radially outer side to make a pair and a first inner through hole and a second inner through hole that are formed on a more radially inner side than the first outer through hole and the second outer through hole to make a pair; a first outer magnet and a second outer magnet housed in the first outer through hole and the second outer through hole respectively; and a first inner magnet and a second inner magnet housed in the first inner through hole and the second inner through hole respectively, wherein an outer opening angle between radially outward extension directions of a radially outer wall of the first outer through hole and a radially outer wall of the second outer through hole is larger than an inner opening angle between radially outward extension directions of a radially outer wall of the first inner through hole and a radially outer wall of the second inner through hole, and wherein an inter-inner through hole length between the first inner through hole and the second inner through hole is larger than an inter-outer through hole length between the first outer through hole and the second outer through hole.

BRIEF DESCRIPTION OF THE DRAWINGS

FIG. 1 is a sectional longitudinal view illustrating a configuration example of a permanent magnet rotary electric machine having a permanent magnet rotor according to an embodiment.
FIG. 2 is a partial transverse sectional view illustrating permanent magnets and a rotor core therearound in one magnetic pole of the permanent magnet rotor according to the embodiment.
FIG. 3 is a partial transverse sectional view illustrating a conventional example of the rotor core around the permanent magnets in one magnetic pole of the permanent magnet rotor according to the embodiment.
FIG. 4 is a partial transverse sectional view illustrating a first example of the rotor core around the permanent magnets in one magnetic pole of the permanent magnet rotor according to the embodiment.
FIG. 5 is a partial transverse sectional view illustrating a second example of the rotor core around the permanent magnets in one magnetic pole of the permanent magnet rotor according to the embodiment.
FIG. 6 is a graph illustrating the effect of the first and second examples of the rotor core around the permanent magnets in one magnetic pole of the permanent magnet rotor according to the embodiment.

DETAILED DESCRIPTION

A permanent magnet rotor and a permanent magnet rotary electric machine according to an embodiment of the present invention will be hereinafter described with reference to the drawings. Here, parts that are identical or similar to each other are denoted by common reference signs and a redundant description thereof will be omitted.

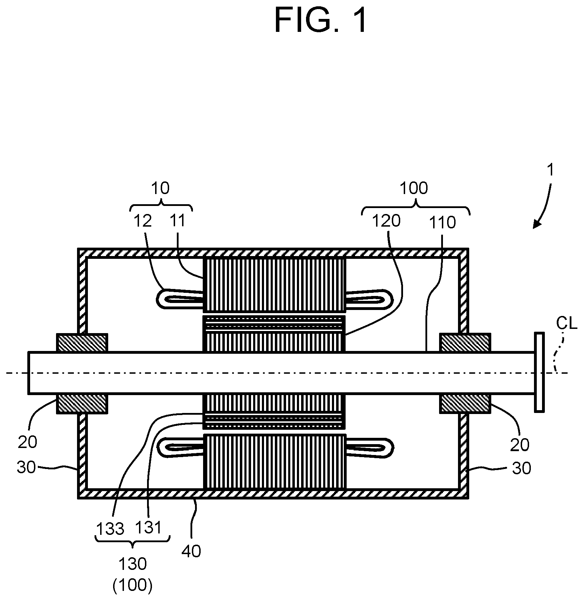

FIG. 1 is a sectional longitudinal view illustrating a configuration example of the permanent magnet rotary electric machine 1 having the permanent magnet rotor 100 according to the embodiment.

The permanent magnet rotary electric machine 1 has the permanent magnet rotor 100, a stator 10, two bearings 20, two bearing brackets 30, and a frame 40.

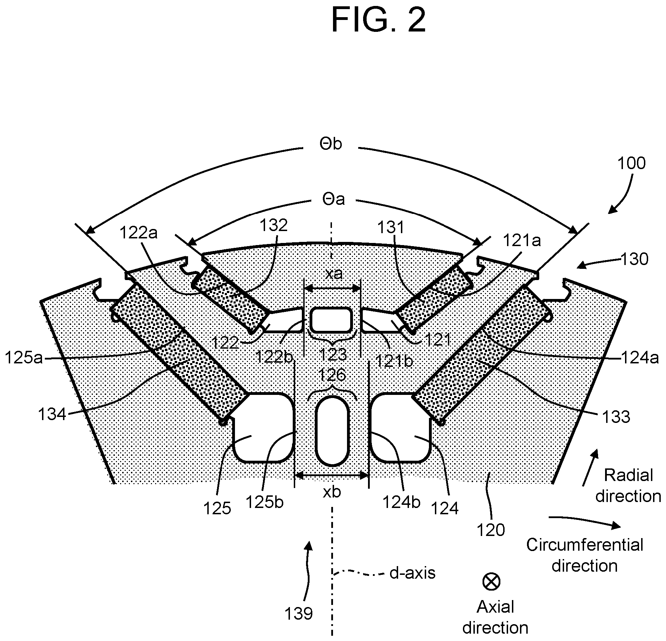

The permanent magnet rotor 100 has a rotor shaft 110 extending in a direction of a rotation axis CL, a rotor core 120 attached to a radially outer side of the rotor shaft 110, and permanent magnets 130 embedded in the rotor core 120. In FIG. 1, a first outer magnet 131 and a first inner magnet 133 out of the permanent magnets 130 are illustrated, but details will be described later with reference to FIG. 2.

The stator 10 has a cylindrical stator core 11 arranged on the outer side of the outer peripheral surface of the rotor core 120 to surround the rotor core 120 and a stator winding 12 wound around the stator core 11.

The two bearings 20 rotatably support the rotor shaft. Each of the two bearing brackets 30 statically support each of the two bearings 20. The frame 40 has a cylindrical shape, houses the stator 10, and has ends connected to the two bearing brackets 30 respectively to support these.

FIG. 2 is a partial transverse sectional view illustrating the permanent magnets 130 and the rotor core 120 therearound in one magnetic pole of the permanent magnet rotor 100 according to the embodiment.

The permanent magnet rotor 100 has an even number of magnetic poles 139, and the magnetic poles whose polarities are opposite, that is, the magnetic poles 139 whose magnetic lines of force are in opposite directions are alternately arranged to be adjacent to each other in the circumferential direction. FIG. 2 illustrates one of the magnetic poles 139.

Here, for convenience of the description, directions will be defined. A direction parallel to the extension direction of the axis of the rotor shaft 110, that is, a direction (front-rear direction) perpendicular to FIG. 2 is defined as an axial direction. A direction extending away from the rotation axis CL (FIG. 1) of the rotor shaft 110 is defined as a radial direction. A direction in which the permanent magnet rotor 100 rotates is defined as a circumferential direction.

The permanent magnet rotor 100 according to this embodiment has, in each of the magnetic poles, the first outer magnet 131, a second outer magnet 132, the first inner magnet 133, and a second inner magnet 134. The first outer magnet 131 and the second outer magnet 132 are arranged on the radially outer side of the first inner magnet 133 and the second inner magnet 134.

The first outer magnet 131 and the second outer magnet 132 are formed to make a pair. Specifically, the first outer magnet 131 and the second outer magnet 132 line up in the circumferential direction, and are arranged such that a gap between the first outer magnet 131 and the second outer magnet 132, that is, their circumferential distance, becomes larger as they go toward the radially outer side.

FIG. 2 illustrates, as an example, the case where the first outer magnet 131 and the second outer magnet 132 are symmetrical and the first inner magnet 133 and the second inner magnet 134 are symmetrical with respect to the center axis (d-axis) of the magnetic pole 139 in a cross section perpendicular to the axial direction, that is, the case of what is called a V-arrangement, but this is not restrictive, that is, the first outer magnet 131 and the second outer magnet 132 may be different in size, or their directions may be asymmetrical. Similarly, the first inner magnet 133 and the second inner magnet 134 may be different in size, or their directions may be asymmetrical.

In the rotor core 120, a first outer through hole 121, a second outer through hole 122, a first inner through hole 124, and a second inner through hole 125 for housing the first outer magnet 131, the second outer magnet 132, the first inner magnet 133, and the second inner magnet 134 respectively are formed. The first outer through hole 121, the second outer through hole 122, the first inner through hole 124, and the second inner through hole 125 are regions high in magnetic reluctance and each function as a flux barrier.

The radially inner sides of the first outer through hole 121 and the second outer through hole 122 forming an outer layer are adjacent to each other across two inner center bridges 123 therebetween. Further, the radially outer portions of the first outer through hole 121 and the second outer through hole 122 communicate with a radially outer side of the rotor core 120. That is, there are no top bridges thereof.

The radially inner sides of the first inner through hole 124 and the second inner through hole 125 forming an inner layer are adjacent to each other across two inner center bridges 126 therebetween. Further, the radially outer portions of the first inner through hole 124 and the second inner through hole 125 communicate with the radially outer side of the rotor core 120. That is, there are no top bridges thereof.

Here, an angle made by a radially outer wall 121a of the first outer through hole 121 and a radially outer wall 122a of the second outer through hole 122, that is, an opening angle between their radially outward extension directions will be called an outer opening angle $\Theta a$. Similarly, an angle made by a radially outer wall 124a of the first inner through hole 124 and a radially outer wall 125a of the second inner through hole 125, that is, an angle between their radially outward extension directions will be called an inner opening angle $\Theta b$.

In this embodiment, the outer opening angle $\Theta a$ is larger than the inner opening angle $\Theta b$. That is, the following formula (1) holds.

$$0 < \Theta b < \Theta a < 180° \qquad \ldots (1)$$

Further, the distance between the first outer through hole 121 and the second outer through hole 122, specifically, the distance between a circumferentially inner wall 121b of the first outer through hole 121 and a circumferentially inner wall 122b of the second outer through hole 122 will be called an inter-outer through hole length xa. Similarly, the distance between the first inner through hole 124 and the second inner through hole 125, specifically, the distance between a circumferentially inner wall 124b of the first inner through hole 124 and a circumferentially inner wall 125b of the second inner through hole 125 will be called an inter-inner through hole length xb.

FIG. 2 illustrates, as an example, the case where the inter-inner through hole length xb is larger than the inter-outer through hole length xa, that is, the following formula (2) holds.

$$xa < xb \qquad \ldots (2)$$

It should be noted that the permanent magnet rotor 100 according to this embodiment only needs to satisfy the condition that the outer opening angle $\Theta a$ is larger than the inner opening angle $\Theta b$ as represented by the above formula (1). That is, the condition that the inter-inner through hole length xb is larger than the inter-outer through hole length xa as represented by the formula (2) is not an essential condition though further improving the effect of this embodiment.

Next, the effect of the permanent magnet rotor 100 according to this embodiment will be described based on comparison with a conventional example.

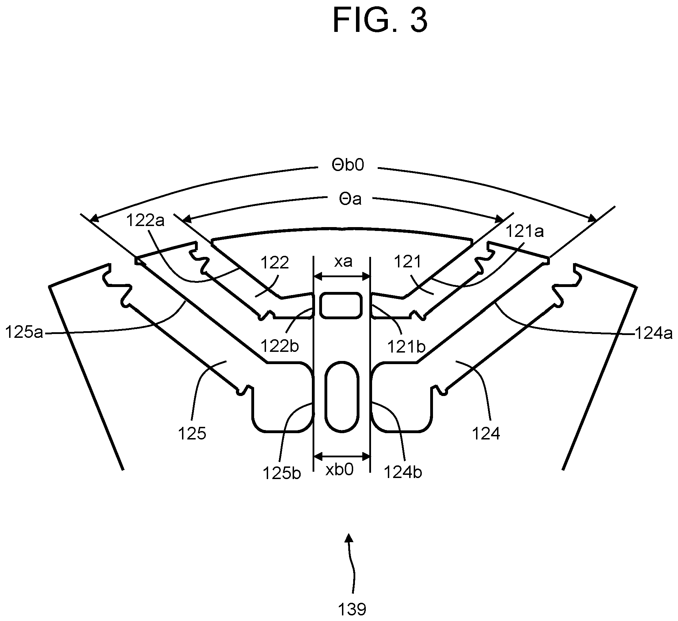

FIG. 3 is a partial transverse sectional view illustrating the conventional example of the rotor core 120 around the permanent magnets 130 in the single magnetic pole 139 of the permanent magnet rotor according to the embodiment.

In the conventional example illustrated in FIG. 3, an inner opening angle $\Theta b0$ is equal to the outer opening angle $\Theta a$. Further, an inter-inner through hole length xb0 is equal to the inter-outer through hole length xa. This conventional example illustrated in FIG. 3 will be called a base shape.

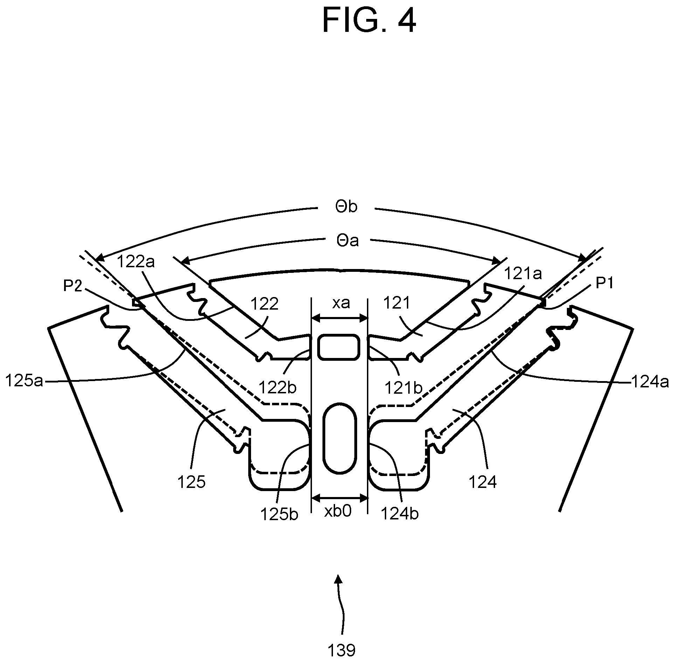

FIG. 4 is a partial transverse sectional view illustrating a first example of the rotor core 120 around the permanent magnets 130 in the single magnetic pole 139 of the permanent magnet rotor 100 according to the embodiment. The broken line represents the base-shaped one.

In the first example, the inner opening angle $\Theta b$ is smaller than the inner opening angle $\Theta b0$ in the conventional example.

In this first example, point P1 at which the radially outer wall 124a of the first inner through hole 124 intersects with an opening and point P2 at which the radially outer wall 125a of the second inner through hole 125 intersects with an opening remain at their positions in the conventional example.

Further, the first inner through hole 124 and the second inner through hole 125 have such a shape that the circumferential positions of the circumferentially inner wall 124b of the first inner through hole 124 and the circumferentially inner wall 125b of the second inner through hole 125 are maintained so that the inter-inner through hole length is left equal to the inter-inner through hole length xb0 in the conventional example. Accordingly, their radially inner ends move radially inward according to the change in their inclination.

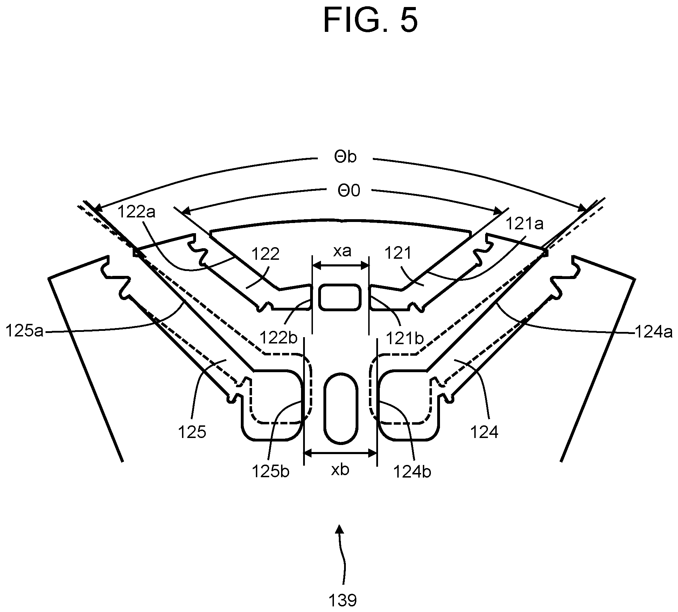

FIG. 5 is a partial transverse sectional view illustrating a second example of the rotor core 120 around the permanent magnets 130 in the single magnetic pole 139 of the permanent magnet rotor 100 according to the embodiment. The contents of the second example are the same as the contents illustrated in FIG. 2. Note that the broken line represents the base-shaped one.

In this second example as well, the inner opening angle $\Theta b$ is smaller than the inner opening angle $\Theta b0$ in the conventional example. The second example is the same as the first example in that point P1 at which the radially outer wall 124a of the first inner through hole 124 intersects with the opening and point P2 at which the radially outer wall 125a of the second inner through hole 125 intersects with the opening remain at the positions in the conventional example.

On the other hand, the first inner through hole 124 and the second inner through hole 125 have such a shape that the inter-inner through hole length xb has a larger value than that of the inter-inner through hole length xb0 in the conventional example.

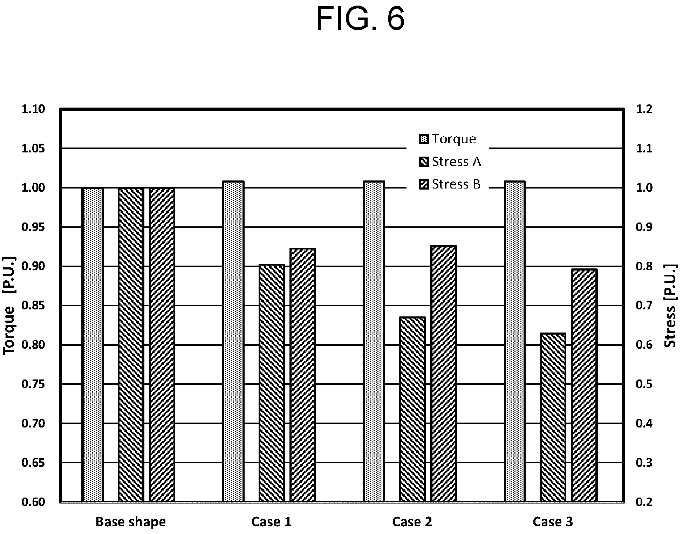

FIG. 6 is a graph illustrating the effect of the first and second examples of the rotor core 120 around the permanent magnets 130 in the single magnetic pole 139 of the permanent magnet rotor 100 according to the embodiment. The horizontal axis represents cases, and three indexes regarding each case are shown. From the left, the first one is torque. The second one is stress A, which is the maximum stress in the outer center bridges 123, and the third one is stress B, which is the maximum stress in the inner center bridges 126. Further, as for the vertical axis, the first axis represents torque [P.U.] and the second axis represents stress [P.U.].

Hereinafter, the cases on the horizontal axis will be sequentially described. Note that case 1 to case 3 correspond to the permanent magnet rotor 100 according to this embodiment.

(Base Shape)

The shape of the conventional example is set as a reference shape (base shape), and values on the vertical axis are based on those in the base shape. Therefore, the values of torque [P.U.] and stresses [P.U.] in the case of the base shape on the horizontal axis are 1.00.

(Case 1)

Case 1, where $\Theta a > \Theta b$ and xa = xb, is a case corresponding to the permanent magnet rotor 100 according to this embodiment.

In case 1, torque slightly increases, and stress A and stress B both decrease.

(Case 2)

Case 2, where $\Theta a > \Theta b$ and xa < xb, is a case corresponding to the permanent magnet rotor 100 according to this embodiment.

In case 2, stress A decreases more than in case 1.

(Case 3)

In case 3, $\Theta a > \Theta b$ and xa < xb as in case 2, but the inclination is made such that the radially outer side fans out more, and it is a case corresponding to the permanent magnet rotor 100 according to the present embodiment. In more detail, the outer center bridges 123 and the inner center bridges 126 each incline with their radially outer sides fanning out in the same manner as in the V-shape arrangement. The distance between points closest to the center of the magnetic pole 139, of outer sides of the straight portions in the inner center bridges 126 is larger than the distance between points closest to the center of the magnetic pole 139, of outer sides of the straight portions in the outer center bridges 123.

In case 3, stress A and stress B both decrease more than in case 2.

As shown by the above case 1 to case 3, in the permanent magnet rotor 100 according to this embodiment, as compared with the conventional example shown as the base shape, torque increases, and stress A and stress B both decrease.

Note that the above effect is achieved also in the case where a top bridge is present for each of the first outer through hole 121 and the second outer through hole 122, the first inner through hole 124 and the second inner through hole 125.

According to the embodiments described hitherto, it is possible to provide a permanent magnet rotor that enables a reduction in bending stress acting on the roots of bridges without lowering torque performance.

[Other Embodiments]

While certain embodiments have been described, these embodiments have been presented by way of example only, and are not intended to limit the scope of the inventions. Further, the features of the embodiments may be combined. The embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

EXPLANATION OF REFERENCE SIGNS

1... permanent magnet rotary electric machine, 10... stator, 11... stator core, 12... stator winding, 20...bearing, 30...bearing bracket, 40...frame, 100...permanent magnet rotor, 110...rotor shaft, 120...rotor core, 121...first outer through hole, 121a...radially outer wall, 121b...circumferentially inner wall, 122... second outer through hole, 122a...radially outer wall, 122b...circumferentially inner wall, 123...outer center bridge, 124...first inner through hole, 124a...radially outer wall, 124b ... circumferentially inner wall, 125... second inner through hole, 125a...radially outer wall, 125b...circumferentially inner wall, 126... inner center bridge, 130...permanent magnet, 131...first outer magnet, 132... second outer magnet, 133...first inner magnet, 134...second inner magnet, 139...magnetic pole

**Claims**

1. A permanent magnet rotor (100) comprising:

   a rotor shaft (110) extending in a rotation axis direction;
   a rotor core (120) attached to the rotor shaft (110), and having, in each magnetic pole (139), a first outer through hole (121) and a second outer through hole (122) that are formed on a radially outer side to make a pair and a first inner through hole (124) and a second inner through hole (125) that are formed on a more radially inner side than the first outer through hole (121) and the second outer through hole (122) to make a pair;
   a first outer magnet (131) and a second outer magnet (132) housed in the first outer through hole (121) and the second outer through hole (122) respectively; and
   a first inner magnet (133) and a second inner magnet (134) housed in the first inner through hole (124) and the second inner through hole (125) respectively,
   wherein an outer opening angle between radially outward extension directions of a radially outer wall (121a) of the first outer through hole (121) and a radially outer wall (122a) of the second outer through hole (122) is larger than an inner opening angle between radially outward extension directions of a radially outer wall (124a) of the first inner through hole (124) and a radially outer wall (125a) of the second inner through hole (125), and
   wherein an inter-inner through hole length between the first inner through hole (124) and the second inner through hole (125) is larger than an inter-outer through hole length between the first outer through hole (121) and the second outer through hole (122).

2. The permanent magnet rotor according to claim 1, wherein the first outer through hole (121) and the second outer through hole (122) are adjacent to each other across two inner center bridges (123) therebetween,

   wherein of the first inner through hole (124) and the second inner through hole (125) are adjacent to each other across two inner center bridges (126) therebetween, and
   wherein the outer center bridges (123) and the inner center bridges (126) each incline with their radially outer sides fanning out.

3. The permanent magnet rotor (100) according to claim 1, wherein the first outer through hole (121) and the second outer through hole (122), and the first inner through hole (124) and the second inner through hole (125) communicate with a radially outer side of the rotor core (120).

4. The permanent magnet rotor (100) according to claim 1, wherein with respect to a d-axis which is a center of the magnetic pole (139), the first inner through hole (124) and the second inner through hole (125) are symmetrical and the first outer through hole (121) and the second outer through hole (122) are symmetrical.

5. A permanent magnet rotary electric machine comprising:

   The permanent magnet rotor (100) according to any one of claim 1 to claim 4;

a stator (10) having a stator core (11) in a cylindrical shape arranged on a radially outer side of the rotor core (120) and a stator winding (12) wound around the stator core (11);

two bearings (20) to rotatably support two sides of the rotor shaft (110) in terms of the rotation axis direction;

two bearing brackets (30) to statically support the two bearings (20) respectively; and

a frame (40) arranged to cover a radially outer side of the stator (10) and to support the two bearing brackets (30).

# FIG. 1

# FIG. 2

# FIG. 3

# FIG. 4

# FIG. 5

# FIG. 6

## INTERNATIONAL SEARCH REPORT

| International application No. |
|---|
| **PCT/JP2022/038529** |

**A. CLASSIFICATION OF SUBJECT MATTER**

*H02K 1/276*(2022.01)i
FI:  H02K1/276

According to International Patent Classification (IPC) or to both national classification and IPC

**B. FIELDS SEARCHED**

Minimum documentation searched (classification system followed by classification symbols)

H02K1/276

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-022335 A (TOSHIBA CORP.) 06 February 2020 (2020-02-06) paragraphs [0008]-[0030], fig. 1-4 | 1-2, 4-5 |
| Y | | 3, 5 |
| Y | WO 2021/060209 A1 (TOSHIBA CORP.) 01 April 2021 (2021-04-01) fig. 1-8 | 3, 5 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 November 2022** | **13 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/038529**

| Patent document cited in search report | | | Publication date (day/month/year) | Patent family member(s) | | | Publication date (day/month/year) |
|---|---|---|---|---|---|---|---|
| JP | 2020-022335 | A | 06 February 2020 | US | 2021/0135521 | A1 | |
| | | | | paragraphs [0017]-[0056], fig. 1-4 | | | |
| WO | 2021/060209 | A1 | 01 April 2021 | US | 2022/0209600 | A1 | |
| | | | | fig. 1-8 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018190103 A
- JP 2020014322 A
- JP 2018051690 A
- JP 2015156353 A